# EUROPEAN PATENT SPECIFICATION

(11) **EP 1 548 321 B1**
(45) Date of publication and mention of the grant of the patent: **31.05.2006**
(21) Application number: 03029715.4
(22) Date of filing: 23.12.2003
(51) Int. Cl.: F16F 9/34, B62K 25/08, F16F 13/00, F16K 21/10

(54) **Hydraulic damping device**
Hydraulischer Dämpfer
Amortisseur hydraulique

(43) Date of publication of application: 29.06.2005
(73) Proprietor: Liou, Wen-Guey, Taichug (TW); Liu, Chao-Hsuan, Tan Tzu Hsiag, Taichung Hsien (TW); Liu, Yu-Chih, Tan Tzu Hsiang, Taichung Hsien (TW); Liu, Chieh-Feng, Tan Tzu Hsiang, Taichung Hsien (TW)
(72) Inventor: Liou, Wen-Guey, Taichug (TW); Liu, Chao-Hsuan, Tan Tzu Hsiag, Taichung Hsien (TW); Liu, Yu-Chih, Tan Tzu Hsiang, Taichung Hsien (TW); Liu, Chieh-Feng, Tan Tzu Hsiang, Taichung Hsien (TW)
(74) Representative: Casalonga, Axel

(56) References cited:
- EP-A- 0 176 738
- EP-A- 0 677 679
- FR-A- 1 526 699
- GB-A- 1 042 094
- US-A- 1 744 514
- US-A- 5 595 270
- US-B1- 6 401 886

## Description

### BACKGROUND OF THE INVENTION

### 1. Field of the Invention

The present invention relates to a damping device, and more particularly to an adjustable hydraulic damping device with a simplified structure.

### 2. Description of Related Art

A hydraulic damping device is used as a shock-absorbing device on a bicycle or a flow controller in a flow discharging system. The conventional hydraulic damping device has an adjusting device for adjusting the damping effect provided by the damping device. However, the conventional hydraulic damping device with an adjusting device has a complex structure, and the cost for manufacturing the conventional damping device is excessive. Such a damper is described in FR-A-1 5266 699.

The main objective of the invention is to provide a hydraulic damping device with a simplified structure. A hydraulic damping device has a cylinder, a rod, a piston, a first biasing member, a seal and a second biasing member. The rod moveably extends into the cylinder. The piston is securely attached to the rod to divide the cylinder into two chambers. The piston has multiple first channels and multiple second channels communicating with the chambers, wherein each first channel has a diameter larger than that of each second channel. The seal is moveably mounted on the rod and abuts against the piston to close the first channels in the piston. Accordingly, the hydraulic damping device has a capability of adjusting the damping effect and has a simplified structure.

### IN THE DRAWINGS

Fig. 1 is an exploded perspective view of a first embodiment of a hydraulic damping device in accordance with the present invention;
Fig. 2 is a side plan view in partial cross section of the first embodiment of the hydraulic damping device in Fig. 1;
Fig. 3 is an operational side plan view in partial cross section of the first embodiment of the hydraulic damping device in Fig. 1;
Fig. 4 is a side plan view in partial cross section of the first embodiment of the hydraulic damping device in Fig. 1 showing the feedback channel in the lining;
Fig. 5 is a side plan view in partial cross section of a second embodiment of a hydraulic damping device in accordance with the present invention;
Fig. 6 is a side plan view in partial cross section of a third embodiment of a hydraulic damping device in accordance with the present invention;
Fig. 7 is a side plan view in partial cross section of a fourth embodiment of a hydraulic damping device in accordance with the present invention;
Fig. 8 is a side plan view in partial cross section of a fifth embodiment of a hydraulic damping device in accordance with the present invention; and
Fig. 9 is a side plan view in partial cross section of a flow controller with the first embodiment of the hydraulic damping device in Fig. 1.

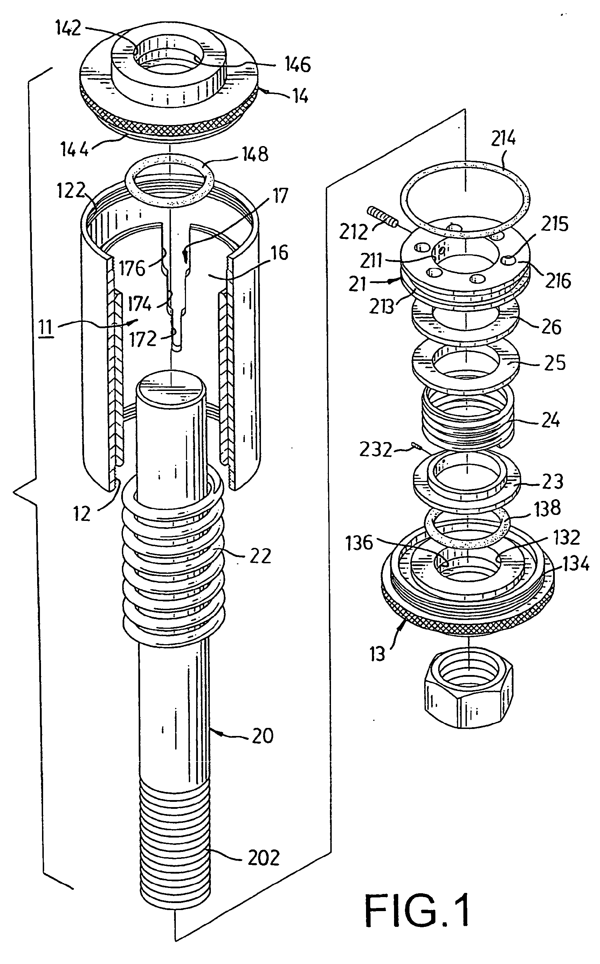

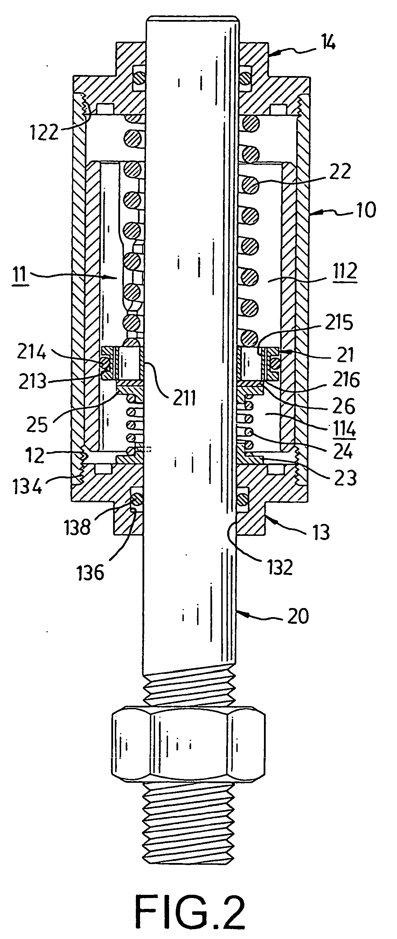

With reference to Figs. 1 and 2, a hydraulic damping device in accordance with the present invention comprises a cylinder (10), a rod (20), a piston (21), a first biasing member (22), a seal (26) and a second biasing member (24). The cylinder (10) has a space (11), a top end (122) and a bottom end (12).

A top cap (14) with an outer thread (144) is screwed with the top end (122), and a bottom cap (13) with an outer thread (134) is screwed with the bottom end (12). A central hole (132) is defined through the bottom cap (13). An annular recess (136) is defined in an inner surface defining a central hole (132). An O-ring (138) is received in the recess (136). Working fluid is contained in the space (11) at an original pressure.

The rod (20) moveably extends through central hole (132) and into the cylinder (10). A central hole (142) is defined through the top cap (14). An annular recess (146) is defined in the inner surface of central hole (142). An O-ring (148) is received in the recess (146). The rod (20) extends through the central hole (142) and out from the top end (122). The O-rings (138,148) can provide excellent sealing effect to the rod (20).

The piston (21) is securely attached to the rod (20) and is received in the cylinder (10) to divide the space (11) into a first chamber (112) and a second chamber (114). A central hole (211) is defined through the piston (21) for the rod (20) extending through the central hole (211). A threaded pin (212) is screwed into the piston (21) and has a free end abutting against the rod (20).

The piston (21) has multiple first channels (215) and second channels (216) communicating with the first chamber (112) and the second chamber (114). The first channels (215) are co-axially arranged around the central hole (211), and the second channels (216) are co-axially arranged between the outer periphery of the piston (21) and the first channels (215). Each first channel (215) has a diameter much larger than that of each second channel (216). An annular recess (213) is defined in the outer surface of the piston (21). An O-ring (214) is received in the annular recess (213).

A tubular lining (16) is mounted in the cylinder (10) and abuts the O-ring (214). A feedback channel (17) is longitudinally defined in the inner surface of the lining (16) along the axial direction of the cylinder (10). The feedback channel (17) comprises a first segment (172), a second segment (174) and a third segment (176) linearly arranged from one end of the lining (16) away from the top cap (14). The width of the first segment (172) is smaller than that of the second segment (174), and the width of the second segment (174) is smaller than that of the third segment (176).

The first biasing member (22) with a resiliency is mounted around the rod (20) and is received in the first chamber (112). Two ends of the first biasing member (22) respectively abut against the top cap (14) and the piston (21).

The seal (26) is moveably mounted on the rod (20), and is received in the second chamber (114) to abut against the piston (21) and to close the first channels (215).

The second biasing member (24) with a resiliency is mounted on the rod (20) to push the seal (26) to abut against the piston (21). A pushing base (25) is moveably mounted on the rod (20) and abuts against the seal (26). An annular securing base (23) is secured to the rod (20) by a threaded pin (232). The second biasing member (24) has two ends respectively abutting against the pushing base (25) and the securing base (23). The resiliency of the second biasing member (24) is smaller than the resiliency of the first biasing member (22).

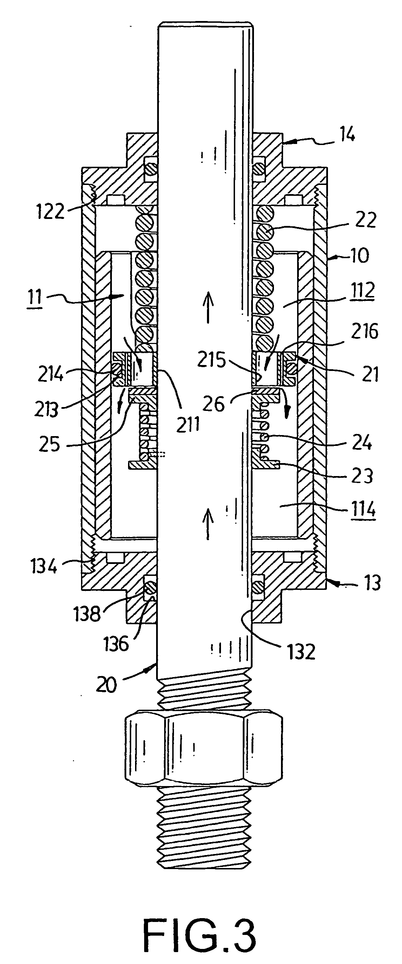

The rod (20) can be connected to a wheel of a bicycle and the cylinder (10) can be connected to the frame of the bicycle, such that the hydraulic damping device serves as a shock-absorbing device for a bicycle. With reference to Figs. 1 to 3, when a force is applied to the wheel and transmitted to the rod (20), the rod (20) will be actuated to move. The piston (21) will move with the rod (20) so that the first chamber (112) in the cylinder (10) is reduced and then the pressure in the first chamber (112) increases. The first biasing member (22) will be compressed. Because the resiliency of the second biasing member (24) is smaller than that of the first biasing member (22), the seal (26) will be pushed away from the piston (21) by the pressure in the first chamber (112). The first channels (215) will be opened, and the working fluid in the first chamber (112) will flow into the second chamber (114) through the first channels (215). With the pressure of the working fluid in the first chamber (112), a first damping effect to the shock is provided. The first biasing member (22) can provide a second damping effect to the shock. This can keep the shock from being transmitting to the bicycle frame, and an excellent shock-absorbing effect is provided.

The damping effect can be adjusted by means of changing another first biasing member (22) with a different resiliency. The structure of the damping device with an adjustable capability is simple. The cost for manufacturing the damping device is low.

When the shock is released, the piston (21) will be pushed to move back by the recoil force provided by the first biasing member (22). The pressure in the first chamber (112) will decrease and the working fluid will flow back to the first chamber (112) from the second chamber (114). When the piston (21) is in the backward stroke, the seal (26) will be pushed to abut against the piston (21) to close the first channels (215). The working fluid will flow back to first chamber (112) through the second channels (216). Because the diameter of the second channels (216) is much smaller than that of the first channels (215), the flow rate of the working fluid flowing back to the first chamber (112) is much slower than that of the working fluid flowing into the second chamber (114) while the rod (20) is in a forward stroke. The speed of the rod (20) with the piston (21) in a backward stroke will be slowed down, and this can prevent a recoil from occurring.

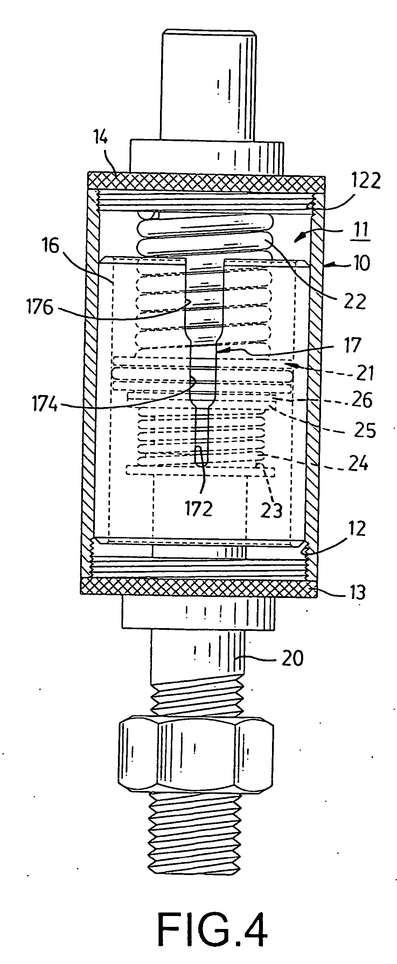

With reference to Figs. 2 and 4, with the feedback channel (17) in the lining (16), the working fluid can flow back to the first chamber (112) through the feedback channel (17). Because the feedback channel (17) has multiple segments (172,174,176) with different widths, the flow rates of the working fluid passing through different segments (172,174,176) are different. This can automatically adjust the flow rate of the working fluid flowing back to the first chamber (112).

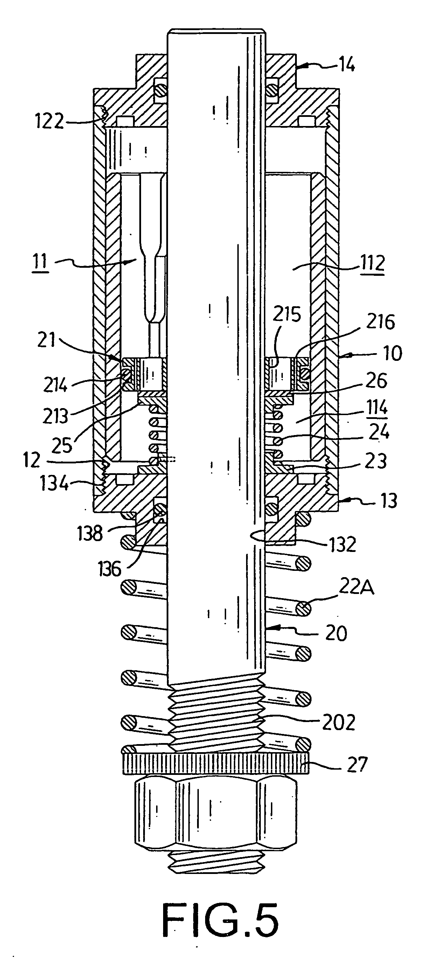

With reference to Fig. 5, the rod (20) has a threaded portion (202) formed on one end far from the cylinder (10). A nut with a ring (27) is screwed with the threaded portion (202). The first biasing member (22A) is exposed from the cylinder (10) and has two ends respectively abutting against the ring (27) and the bottom cap (13).

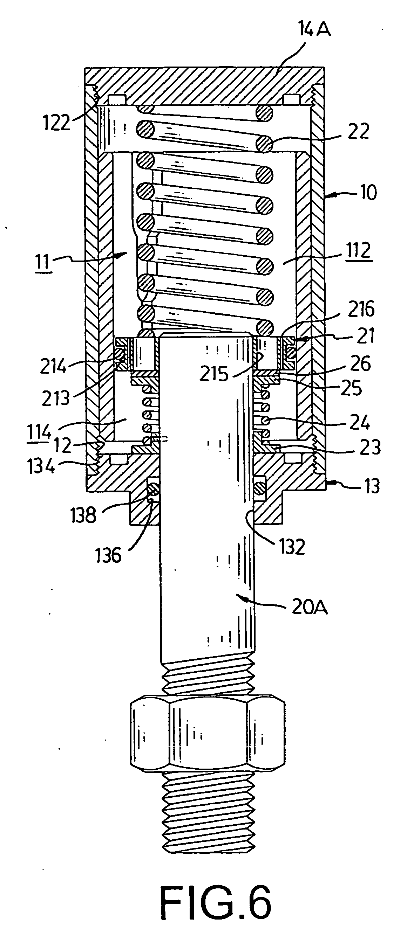

With reference to Fig. 6, the top cap (14A) closes the top end (122) of the cylinder (10). The end of the rod (20A) extending into the cylinder (10) does not extend out from the top cap (14A), and the piston (21) is secured to the end of the rod (20A). The first biasing member (22) is received in the first chamber (112) and has two ends respectively abutting against the piston (21) and the top cap (14A). The first biasing member (22) can also provide a recoil force to the rod (20A).

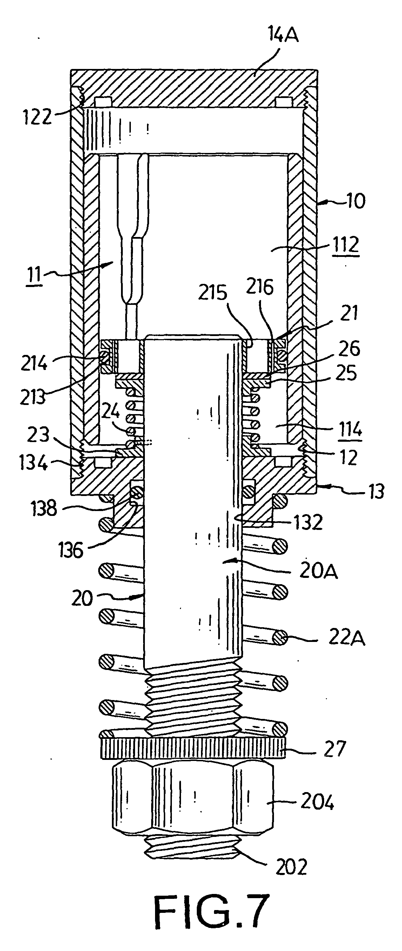

With reference to Fig. 7, the first biasing member (22A) is exposed from the cylinder (10) and has two ends respectively abutting against the bottom cap (13) and the ring (27).

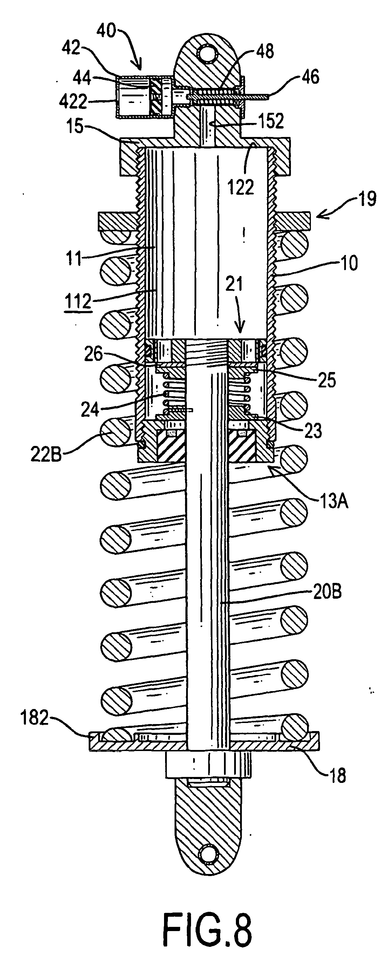

With reference to Fig. 8, a lower holder (18) is mounted on the end of the rod (20B) far from the cylinder (10). An upper holder (19) is mounted on the top end (122) of the cylinder (10). The first biasing member (22B) is exposed from the cylinder (10) and has two ends respectively abutting against the upper holder (19) and the lower holder (18). The lower holder (18) has a skirt (182) formed around the lower holder (18) to hold the corresponding end of the first biasing member (22B).

A buffer (40) is mounted on the top cap (15) and communicates with the space (11) in the cylinder (10). The top cap (15) has a channel (152) communicating with the space (11) in the cylinder (10). The buffer (40) comprises a housing (42), a buffer piston (44), a sealing rod (46) and a spring (48). The housing (42) is attached to the top cap (15) and has an inner space communicating with the channel (152). An opening (422) is defined in the housing (42) at one end far away from the top cap (15). The buffer piston (44) is moveably mounted in the inner space of the housing (42) to divide the inner space of the housing (42) into a first chamber communicating with the channel (152) and a second chamber communicating with the opening (422). The sealing rod (46) is moveably received in the channel (152) and has a sealing disk formed on one end of the sealing rod (46) to close a passage between the channel (152) and the first chamber in the housing (42). The other end of the sealing rod (46) extends out from the top cap (15) and is connected to a handle bar through a cable. Accordingly, when the user pulls the handle bar, the sealing rod (46) will be actuated to move in the channel (152) so as to open the passage between the channel (152) and the first chamber in the housing (42). Consequently, working fluid in the inner space (11) can flow into the first chamber in the housing (42) through the channel (152). The spring (48) is mounted around the sealing rod (46) to provide a return force to push the sealing disk on the sealing rod (46) to close the passage between the channel (152) and the first chamber in the housing (42).

With such a buffer (40), the working fluid in the space (11) of the cylinder (10) will flow into the first chamber of the housing (42) when a shock is applied to the wheel and the rod (20B) with the piston (21) is actuated to move in the space (11) toward the top cap (15). The working fluid will push the buffer piston (44) to move relative to the housing (42). When the shock is released, the working fluid will flow back to the space (11) in the body (10), and the buffer piston (44) will move backward by the environmental air pressure.

When the handle bar connected to the sealing rod (46) is released, the sealing rod (46) will move to close the passage between first chamber in the housing (42) and the channel (152) by the recoil force provided by the spring (48). Accordingly, the working fluid, especially an oil, cannot flow into the housing (42) of the buffer, such that the first chamber (112) in the body (10) is almost uncompressible. Consequently, the piston (21) will not move relative to the body (10) even when a shock is applied to the rod (20B). The damping device serves as a rigid element, such that the damping effect of the damping device can be cut off when the user needs.

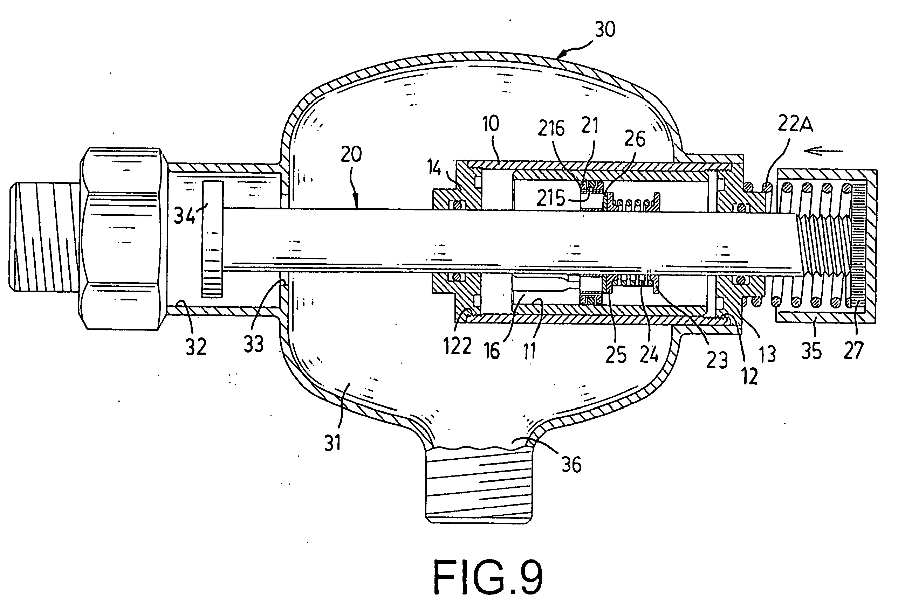

With reference to Fig. 9, the damping device can be construed of a flow controller in a flow discharging system. The cylinder (10) is received in a housing (31) of a liquid-discharging device (30) with an inlet (32) and an outlet (36). One end of the rod (20) extends through a bore (33) in the housing (31) and into the inlet (32), and a valve plate (34) mounted on the end of the rod (20) is adapted to close the bore (33). The other end of the rod (20) has a ring (27) threadingly received thereon, and the first biasing member (22A) is mounted between the bottom cap (13) on the cylinder (10) and the ring (27). A push button (35) is attached to the ring (27). Consequently, when the user presses the push button (35), the rod (20) with the piston (21) will move relative to the cylinder (10), and the valve plate (34) will leave the bore (33) so as to open the bore (33). Accordingly, the fluid will be discharged from the outlet (36) through the inlet (32), the bore (33) and the housing (31). Because the damping device in accordance with the present invention has a slow backward stroke, an amount of time is needed for the plate valve (34) to move to the position where it closes the bore (33). Therefore, a desired amount of liquid will be discharged from the discharging device (30), and the damping device in accordance with the present invention can be used to control the flow rate and discharging amount of the liquid.

## Claims

1. A hydraulic damping device comprising:
a cylinder (10) with an inner space (11), a top end, a bottom end and an axial direction;
a top cap (14) and a bottom cap (13) respectively attached to the top end and the bottom end of the cylinder (10);
a rod (20) moveably extending through the bottom cap and into the inner space (11) in the cylinder (10);
a piston (21) securely attached to the rod (20) and received in the cylinder (10) to divide the inner space (11) in the cylinder (10) into a first chamber (112) and a second chamber (114), the piston (21) having multiple first channels (215) defined through the piston (21) and communicating with the first chamber (112) and the second chamber (114) in the cylinder (10) and multiple second channels (216) defined through the piston (21) and communicating with the first chamber (112) and the second chamber (114) in the cylinder (10),
a working fluid contained in the inner space (11) of the cylinder (10) at an original pressure;
a seal (26) moveably mounted on the rod (20), received in the second chamber (114) and abutting against the piston (21) to close the first channels (215) in the piston (21);
a first biasing member (22) with a resiliency connected to the rod (20) to provide a recoil force to the rod (20); **characterized in that** each first channel (215) has a diameter larger than a diameter of each second channel (216), **in that** there is a second biasing member (24) with a resiliency mounted on the rod (20) to provide a force to push the seal (26) to abut against the piston (21), and **in that**
the resiliency of the second biasing member (24) is smaller than the resiliency of the first biasing member (22).

2. The hydraulic damping device as claimed in claim 1 further comprising a buffer (40) mounted on the top cap (15) and communicating with the space (11) in the cylinder (10), wherein
the top cap (15) has a channel (152) communicating with the space (11) in the cylinder (10); and
the buffer (40) comprises
a housing (42) attached to the top cap (15) and has an inner space communicating with the channel (152) in the top cap (15), an opening (422) defined in the housing (42) at one end far away from the top cap (15);
a buffer piston (44) moveably mounted in the inner space of the housing (42) to divide the inner space of the housing (42) into a first chamber communicating with the channel (152) and a second chamber communicating with the opening (422);
a sealing rod (46) moveably received in the channel (152) and having a sealing disk formed on a first end of the sealing rod (46) to close a passage between the channel (152) and the first chamber in the housing (42), and a second end of the sealing rod (46) extending out from the top cap (15) and is adapted to be connected to an actuating element on a handle bar through a cable; and
a spring (48) mounted around the sealing rod (46) to provide a force to push the sealing disk on the sealing rod (46) to close the passage between the channel (152) and the first chamber in the housing (42).

3. The hydraulic damping device as claimed in claim 1 further comprising a tubular lining (16) mounted in the cylinder (10) and having an inner surface; and
the piston (21) has an outer periphery abutting against the inner surface of the lining (16).

4. The hydraulic damping device as claimed in claim 3, wherein the lining (16) has a feedback channel (17) longitudinally defined in the inner surface of the lining (16) along the axial direction of the cylinder (10).

5. The hydraulic damping device as claimed in claim 4, wherein the feedback channel (17) comprises a first segment (172) with a width, a second segment (174) with a width and a third segment (176) with a width linearly arranged from one end of the lining (16) far from the top cap (14),
wherein the width of the first segment (172) is smaller than the width of the second segment (174); and
the width of the second segment (174) is smaller than the width of the third segment (176).

6. The hydraulic damping device as claimed in claim 1 further comprising a pushing base (25) moveably mounted on the rod (20) and abutting against the seal (26); and
a securing base (23) secured to the rod (20),
wherein the second biasing member (24) has two ends respectively abutting against the pushing base (25) and the securing base (23).

## Patentansprüche

1. Eine hydraulische Dämpfungsvorrichtung, umfassend:
einen Zylinder (10) mit einem Innenraum (11), einem oberen Ende, einem unteren Ende und einer axialen Richtung;
einen Aufsatz für das obere Ende (14) und einen Aufsatz für das untere Ende (13), jeweils am oberen Ende und unteren Ende des Zylinders (10) angebracht;
einen Rundstab (20), der sich durch den Aufsatz des unteren Endes in den Innenraum (11) im Zylinder (10) hinein bewegt;
einen Kolben (21), der fest am Rundstab (20) angebracht ist und im Zylinder (10) aufgenommen wird, um den Innenraum (11) im Zylinder (10) in eine erste Kammer (112) und eine zweite Kammer (114) zu teilen, wobei der Kolben (21) mehrere erste Kanäle (215) besitzt, die durch den Kolben (21) definiert sind und mit der ersten Kammer (112) und der zweiten Kammer (114) im Zylinder (10) kommunizieren, und mehrere zweite Kanäle (216), die durch den Kolben (21) definiert sind und mit der ersten Kammer (112) und der zweiten Kammer (114) im Zylinder (10) kommunizieren;
ein Arbeitsmedium, das sich bei Ausgangsdruck im Innenraum (11) des Zylinders (10) befindet;
einen Dichtungsring (26), der beweglich am Rundstab (20) angebracht ist, in der zweiten Kammer aufgenommen wird (114) und an den Kolben (21) grenzt, um die ersten Kanäle (215) im Kolben (21) zu verschließen;
ein erstes Vorspannelement (22), das mit einer Federung mit dem Rundstab (20) verbunden ist, um dem Rundstab (20) eine Rückstoßkraft zu verleihen, **dadurch gekennzeichnet, dass**
jeder erste Kanal (215) einen Durchmesser hat, der größer ist als der Durchmesser eines zweiten Kanals (216),
ein zweites Vorspannelement (24) vorhanden ist, das mit einer Federung mit dem Rundstab (20) verbunden ist, um eine Kraft bereitzustellen, die den Dichtungsring (26) gegen den Rundstab (20) drückt und
die Federung des zweiten Vorspannelements (24) kleiner ist als die Federung des ersten Vorspannelements (22).

2. Eine hydraulische Dämpfungsvorrichtung nach Anspruch 1, ferner umfassend einen Stoßdämpfer (40), der am oberen Aufsatz (15) angebracht ist und mit dem Innenraum (11) des Zylinders (10) kommuniziert, wobei
der obere Aufsatz (15) einen Kanal (152) aufweist, der mit dem Innenraum (11) des Zylinders (10) kommuniziert; und
der Stoßdämpfer (40) umfasst
ein Gehäuse (42), das am oberen Aufsatz (15) angebracht ist und einen Innenraum, der mit dem Kanal (152) im oberen Aufsatz (15) kommuniziert und eine Öffnung (422), die sich im Gehäuse (42) an einem Ende befindet, das weit vom oberen Aufsatz (15) entfernt ist;
einen Stoßdämpferkolben (44), der beweglich im Innenraum des Gehäuses (42) angebracht ist, um den Innenraum des Gehäuses (42) in eine erste Kammer zu unterteilen, die mit dem Kanal (152) kommuniziert und in eine zweite Kammer, die mit der Öffnung (422) kommuniziert;
einen Dichtungsstab (46), der sich in den Kanal (152) hineinbewegt und am ersten Ende des Dichtungsstabs (46) über eine Dichtungsscheibe verfügt, um den Durchlass zwischen dem Kanal (152) und der ersten Kammer im Gehäuse (42) zu verschließen, und über ein zweites Ende des Dichtungsstabs (46), das sich vom oberen Aufsatz (15) erstreckt und geeignet ist, um durch ein Kabel an ein Bedienelement am Lenker angeschlossen zu werden; und
eine Feder (48), die rund um den Dichtungsstab (46) angebracht ist, um eine Kraft bereitzustellen, die den Dichtungsring (26) gegen den Rundstab (20) drückt, um den Durchlass zwischen dem Kanal (152) und der ersten Kammer im Gehäuse (42) zu verschließen.

3. Eine hydraulische Dämpfungsvorrichtung nach Anspruch 1, ferner umfassend eine röhrenförmige Auskleidung (16), die im Zylinder (10) angebracht ist und eine innere Oberfläche hat; wobei der Kolben (21) eine äußere Peripherie hat, die an die innere Oberfläche der Auskleidung (16) grenzt.

4. Eine hydraulische Dämpfungsvorrichtung nach Anspruch 3, wobei die Auskleidung (16) einen Rückkopplungskanal (17) aufweist, der in der inneren Oberfläche der Auskleidung (16) entlang der axialen Richtung des Zylinders (10) in Längsrichtung definiert ist.

5. Eine hydraulische Dämpfungsvorrichtung nach Anspruch 4, wobei der Rückkopplungskanal (17) ein erstes Segment (172) mit einer Breite, ein zweites Segment (174) mit einer Breite und ein drittes Segment (176) mit einer Breite umfasst, die von einem Ende der Auskleidung (16) weit entfernt vom oberen Aufsatz (14) linear angeordnet ist,
wobei die Breite des ersten Segments (172) kleiner ist als die Breite des zweiten Segments (174); und
die Breite des zweiten Segments (174) kleiner ist als die Breite des dritten Segments (176).

6. Eine hydraulische Dämpfungsvorrichtung nach Anspruch 1, ferner umfassend eine Stoßunterlage (25), die beweglich am Rundstab (20) angebracht ist und an den Dichtungsring (26) grenzt; und
eine Sicherungsunterlage (23), die am Rundstab (20) angebracht ist, wobei das zweite Vorspannelement (24) zwei Enden hat, die jeweils an die Stoßunterlage (25) und die Sicherungsunterlage (23) grenzen.

## Revendications

1. Amortisseur hydraulique comprenant :
un cylindre (10) comprenant un espace intérieur (11), une extrémité supérieure, une extrémité inférieure et une direction axiale ;
un chapeau supérieur (14) et un chapeau inférieur (13) fixés respectivement à l'extrémité supérieure et à l'extrémité inférieure du cylindre (10) ;
une tige (20) traversant de façon mobile le chapeau inférieur et l'espace intérieur (11) du cylindre (10) ;
un piston (21) assujetti à la tige (20) et logé dans le cylindre (10) pour diviser l'espace intérieur (11) du cylindre (10) en une première chambre (112) et une deuxième chambre (114), le piston (21) comportant plusieurs premiers canaux (215) qui traversent le piston (21) et qui communiquent avec la première chambre (112) et la deuxième chambre (114) du cylindre (10) et plusieurs deuxièmes canaux (216) qui traversent le piston (21) et qui communiquent avec la première chambre (112) et la deuxième chambre (114) du cylindre (10) ;
un fluide de travail contenu dans l'espace intérieur (11) du cylindre (10) à une pression d'origine ;
un joint (26) monté de façon mobile sur la tige (20), logé dans la deuxième chambre (114) et en appui contre le piston (21) pour fermer les premiers canaux (215) du piston (21) ;
un premier élément de sollicitation (22) pourvu d'une certaine raideur et connecté à la tige (20) pour fournir une force de rappel à la tige (20) ;
**caractérisé en ce que** chaque premier canal (215) a un diamètre supérieur au diamètre de chaque deuxième canal (216),
**en ce qu'**un deuxième élément de sollicitation (24) pourvu d'une certaine raideur est monté sur la tige (20) pour fournir une force destinée à pousser le joint (26) pour l'appliquer contre le piston (21), et **en ce que**
la raideur du deuxième élément de sollicitation (24) est inférieure à la raideur du premier élément de sollicitation (22).

2. Amortisseur hydraulique selon la revendication 1, comprenant en outre un tampon (40) monté sur le chapeau supérieur (15) et communiquant avec l'espace (11) présent dans le cylindre (10), dans lequel
le chapeau supérieur (15) comporte un canal (152) communiquant avec l'espace (11) présent dans le cylindre (10) ; et
le tampon (40) comprend :
un boîtier (42) fixé au chapeau supérieur (15) et comportant un espace intérieur qui communique avec le canal (152) du chapeau supérieur (15), une ouverture (422) définie dans le boîtier (42) en une extrémité éloignée du chapeau supérieur (15) ;
un piston de tampon (44) monté de façon mobile dans l'espace intérieur du boîtier (42) pour diviser l'espace intérieur du boîtier (42) en une première chambre communiquant avec le canal (152) et une deuxième chambre communiquant avec l'ouverture (422) ;
une tige d'obturation (46) logée de manière mobile dans le canal (152) et comportant un disque d'obturation formé sur une première extrémité de la tige d'obturation (46) pour fermer le passage entre le canal (152) et la première chambre du boîtier (42), et une deuxième extrémité de la tige d'obturation (46) s'étendant hors du chapeau supérieur (15) et étant adaptée pour être connectée à un élément d'actionnement présent sur une poignée via un câble ; et
un ressort (48) monté autour de la tige d'obturation (46) pour fournir une force destinée à pousser le disque d'obturation sur la tige d'obturation (46) pour fermer le passage entre le canal (152) et la première chambre du boîtier (42).

3. Amortisseur hydraulique selon la revendication 1, comprenant en outre une chemise tubulaire (16) montée dans le cylindre (10) et ayant une surface intérieure ; et
le piston (21) a une périphérie extérieure en appui contre la surface intérieure de la chemise (16).

4. Amortisseur hydraulique selon la revendication 3, dans lequel la chemise (16) comporte un canal de retour (17) défini longitudinalement dans la surface intérieure de la chemise (16) selon la direction axiale du cylindre (10).

5. Amortisseur hydraulique selon la revendication 4, dans lequel le canal de retour (17) comprend un premier segment (172) ayant une largeur, un deuxième segment (174) ayant une largeur et un troisième segment (176) ayant une largeur disposés linéairement depuis une extrémité de la chemise (16) éloignée du chapeau supérieur (14),
dans lequel la largeur du premier segment (172) est inférieure à la largeur du deuxième segment (174) ; et
la largeur du deuxième segment (174) est inférieure à la largeur du troisième segment (176).

6. Amortisseur hydraulique selon la revendication 1, comprenant en outre une base de poussée (25) montée de manière mobile sur la tige (20) et en appui contre le joint (26) ; et
une base de fixation (23) assujettie à la tige (20),
dans lequel le deuxième élément de sollicitation (24) a deux extrémités respectivement en appui contre la base de poussée (25) et contre la base de fixation (23).
